(19) Europäisches Patentamt
European Patent Office
Office européen des brevets

(11) **EP 0 691 940 B1**

(12) **EUROPEAN PATENT SPECIFICATION**

(45) Date of publication and mention
of the grant of the patent:
**02.05.1997 Bulletin 1997/18**

(51) Int Cl.⁶: **C03B 9/41**
// G05D16/20

(21) Application number: **94910490.5**

(22) Date of filing: **28.03.1994**

(86) International application number:
**PCT/GB94/00643**

(87) International publication number:
**WO 94/22776 (13.10.1994 Gazette 1994/23)**

(54) **CONTROL OF PLUNGERS IN GLASSWARE FORMING MACHINES**

STEUERUNG VON PUNGERS IN GLASFORMMASCHINEN

CONTROLE DES PLONGEURS DANS LES MACHINES DE FABRICATION D'ARTICLES EN VERRE

(84) Designated Contracting States:
**DE ES FR GB IT**

(30) Priority: **01.04.1993 GB 9306892**

(43) Date of publication of application:
**17.01.1996 Bulletin 1996/03**

(73) Proprietor: **Emhart Glass Machinery Investments Inc.**
**Wilmington, Delaware 19801 (US)**

(72) Inventors:
• **PLATER, Neil, James**
**Doncaster DN1 2LU (GB)**

• **COUNSELL, John**
**Wirral, Merseyside L48 9XG (GB)**
• **ROSKILLY, Anthony Paul**
**Newcastle-upon-Tyne NE7 7UY (GB)**

(74) Representative: **Nash, Keith Wilfrid**
**KEITH W. NASH & Co.**
**Pearl Assurance House**
**90-92 Regent Street**
**Cambridge CB2 1DP (GB)**

(56) References cited:
**DE-C- 3 151 521          DE-C- 3 401 465**

**Description**

Field of the invention

This invention is concerned with plunger mechanisms for use in forming a gob of molten glass into a parison in a glassware forming machine.

Background to the invention

In a common type of glassware forming machine, the so-called I.S. machine, molten glass is formed into a parison and the parison is transferred to a mould in which it is blown into the shape of a container. Gobs of molten glass are formed into parisons either by a pressing operation alone (in the so called press and blow method) or by a pressing and blowing operation (in the so-called blow and blow method), both operations involving the use of a plunger mechanism.

The operation of the plunger mechanism is crucial in the successful operation of the glassware forming machine. The time taken for the operation is often a significant factor in determining the cycle time of the machine, and to obtain consistent containers it is necessary that consistent operation of the plunger mechanism is provided. Small variations in the weight of a gob and in the size of the mould cavity make it difficult to determine when a pressing operation should terminate: it is essential that the pressure is sufficient to ensure that, when using the press and blow method, molten glass is forced down into a neck ring to form the eventual neck of the container, without being sufficient to force a two part blank mould apart and forming seams on the parison.

Prior Art

In EP-A-165012, a plunger mechanism is described which is hydraulically operated, and comprises a piston and cylinder arrangement with the plunger being mounted for movement on the piston. A servo mechanism operates to control the rate at which hydraulic fluid enters and/or leaves the cylinder, and a position feed back device provides signals indicative of the position of the plunger to a control device which is arranged to control the movement of the piston during the first part of its stroke: towards the end of the stroke, when excessive pressure might cause opening of the parison mould, control is changed over from a position control to a pressure control - that is to say a limited pressure is exerted on the piston and its movement is determined to a large extent by a shrinkage of the glass in the mould which may take place.

From the point of view of the movement achieved by the plunger, the arrangement in EP-A-165012 is effective. However, in glass machines hydraulic mechanisms suffer from several disadvantages, and there is therefore a requirement for a pneumatically operated system. Hydraulic systems have an intrinsically higher cost than pneumatic systems, and also require significantly more maintenance - an air bubble or dirt in the hydraulic fluid can cause malfunction of the system. In many cases, of which glass machinery is one, the significant disadvantage of a hydraulic system is the fire risk - a small puncture in the system can lead to a fine spray of oil resulting which, in the context of a machine operating with molten glass gives a substantial risk of fire.

By contrast a pneumatic system has lower cost, is easier to maintain, has minimum fire risk and is much less sensitive than a hydraulic system to variations in ambient temperature which occur in glass forming machines. The disadvantage of a pneumatic system is that control is more difficult, particularly when it is desired to bring a component to rest at a desired position as the compressibility of air can allow moving pneumatically operated components to overrun or to oscillate.

It is one of the objects of the present invention to provide a pneumatically operated plunger mechanism in which the movement of the plunger is controlled and the risk of applying excessive force to the plunger avoided.

The Invention

The invention provides a control system for controlling the movement of a plunger for use in forming parisons in a glassware manufacturing machine which plunger is driven between first and second positions by a pneumatic piston and cylinder device, comprising

a solenoid driven proportional pneumatic valve adapted to control the supply of air under pressure to the piston and cylinder device,
a transducer which senses the position of the plunger
pressure sensors which sense the pressure on opposite sides of the piston of the piston and cylinder device
an electronic signal processing system incorporating a memory in which a motion profile and force limits are stored, which processing system throughout each cycle receives as a feed back from the transducer the position of the plunger and from the pressure sensors the pressure on opposite sides of the piston and which produces control signals for the valve in accordance with a repetitive algorithm which takes account of

(a) the displacement of the plunger from the motion profile
(b) the velocity of the plunger as derived from the rate of change of its position, and
(c) the force exerted on the plunger as derived from the pressure difference across the piston,

so that the valve supplies air to the piston and cylinder to cause the plunger to move from rest at the first position for a first period of time in a manner limited by the motion profile and a first force limit applied to the plunger, for a second period of time in a manner limited by the reduction from the first force limit to a second force limit and for a third period of time limited by the second force limit.

A plunger mechanism which embodies the invention will now be described with reference to the accompanying drawings in which

Figure 1 shows, diagrammatically, the plunger mechanism embodying the invention;
Figure 2 shows schematically a graph of position of the plunger against time;
Figure 3 shows schematically a graph of the force limits applied to the plunger against the position of the plunger;

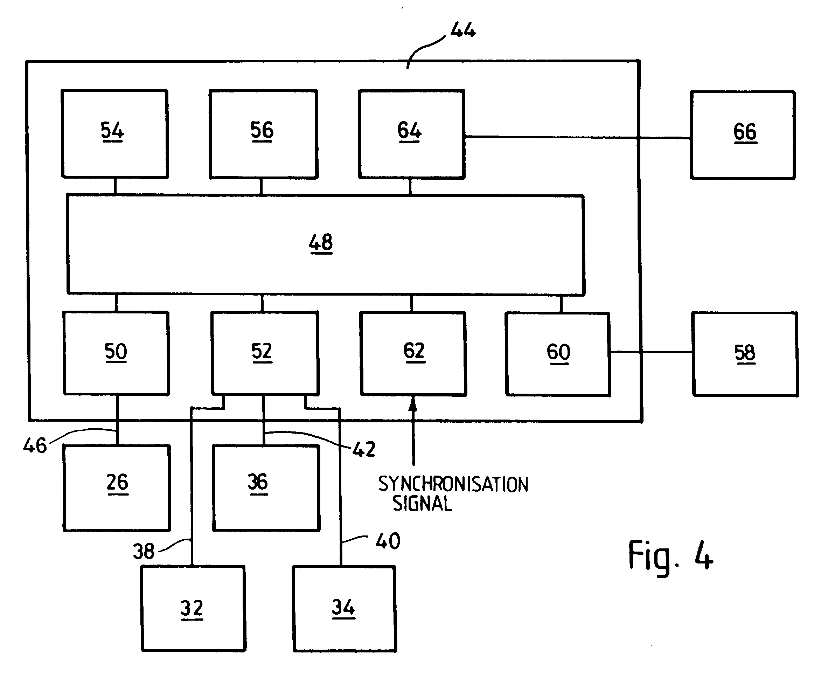

Figure 4 shows a block diagram of a signal processing system of the mechanism.
Figure 5 is a functional block diagram of the machine controller.

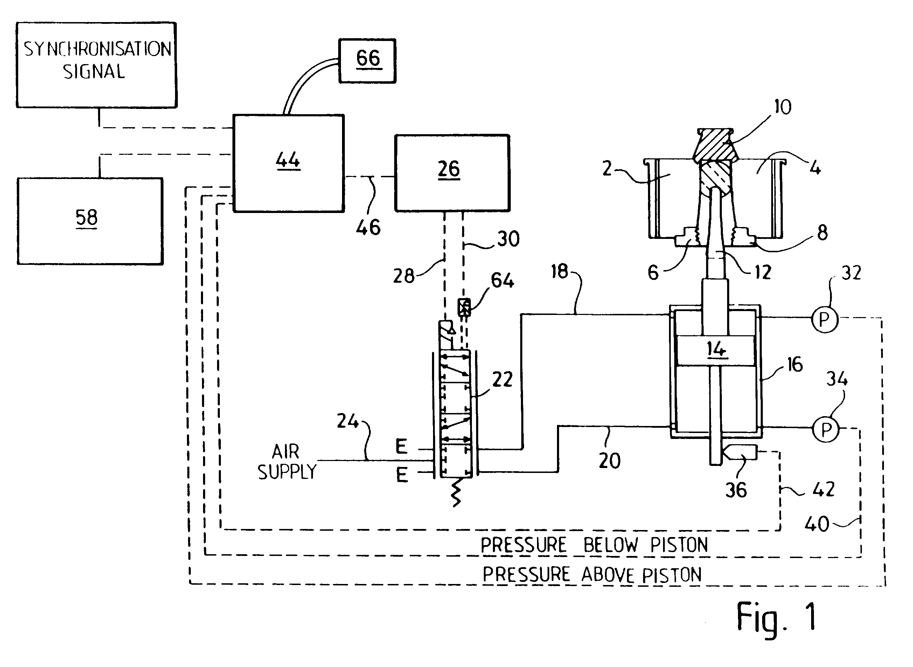

The plunger mechanism embodying the invention is for use at the blank mould station of an individual section glassware forming machine. Referring to Figure 1, at the blank mould station is positioned the blank mould, comprising two side mould members 2,4, two neck ring members. 6,8 and a baffle 10. In operation of the machine when the side mould members 2,4, and the neck ring members 6.8 are in closed positions to provide a mould cavity, a plunger 12 of the plunger mechanism is in a first retracted position in the mould cavity and the baffle 10 is in an out of the way position. A gob of molten glass is then supplied into the mould cavity and rests on the plunger. The baffle 10 is then moved into position over the mould cavity, and the plunger 12 is moved upwards towards its advanced position, forcing the molten glass into the shape of the mould cavity to form a parison, a neck portion of which is formed in the neck ring members 6,8. The plunger 12 is then retracted to a fully withdrawn position, the baffle 10 moved to its out of the way position, the mould members 2 and 4 opened away from each other and the formed parison carried away to a blow mould station by the neck ring members 6,8.

Movement of the plunger 12 is obtained by a piston and cylinder arrangement comprising a piston 14 attached to the plunger and a cylinder 16. An air line 18 communicates with the cylinder 16 above the piston 14 and air line 20 with the cylinder 16 below the piston 14. The air lines 18 and 20 are connected to a servo controlled proportional pneumatic valve 22 which, as desired, can connect one of the air lines 18 and 20 to a source of compressed air 24 and the other exhaust, thus to obtain movement of the piston 14 and of the plunger 12.

Operation of the valve 22 is controlled by a valve controller 26 which is connected to the valve 22 by two lines, a valve spool control line 28 through which a signal may be sent from the controller to the valve to obtain movement of the valve spool, and a valve spool position line 30 which transmits a signal from the valve to the controller to indicate the precise position of the valve spool.

As shown in figure 1, a first pressure transducer 32 is connected to the cylinder 16 to sense the air pressure in the cylinder 16 above the piston 14 and a second pressure transducer 34 is connected to the cylinder 16 to sense the air pressure below the piston 14. A position transducer 36 senses movement of the piston 14, and thus of the plunger 12. The three transducers 32,34,36 are connected by the lines 38,40,42 to a servo control card 44 which is arranged to pass the necessary instructions to the valve controller 26 along a line 46.

The servo control card 44 provides a signal processing system. It comprises a micro controller 48 which is connected to the valve controller 26 through a digital/analogue converter 50 and the line 46, through which spool position demand signals are provided to the valve controller 26.

The micro controller 48 is connected through an analogue to digital converter 52 to the position transducer 36 and the two pressure sensors 32 and 34, the position transducer 36 providing signals indicating the actual position of the plunger 12 and the sensors 32 and 34 indicating the pressures above and below the piston 14. The micro controller 40 is also connected to an EPROM 54 and a RAM 56 in either of which is stored a profile program for the plunger movement and force limits on the plunger.

A supervisory computer 58 of the glassware manufacturing machine is connected through a network interface 60 to the micro controller 48, and thence through to the RAM 56. Algorithm information is passed to RAM 56 and stored and is accessed at appropriate times by the micro controller 48. A synchronization signal is supplied to the micro controller 48 through a digital interface 62. If desired the micro controller can be arranged to provide the synchronization signal internally.

A UART (Universal Asynchronous Receiver Transmitter) 64 is connected to a Hand Held Terminal (HHT) 66 to allow constant factors of the algorithm program to be adjusted to enable the actual path followed by the plunger 12 to be modified. These factors are provided to the micro controller 48.

Thus the micro controller 48 takes the profile program and the force limits from the EPROM 54 or RAM 56, the algorithm program from the EPROM 54 or RAM 56 and the individual factors from the EPROM 54, ram 56, UART 64 or Supervisory computer 58, and combines them to enable it repetitively to use the algorithm program to enable it to provide the necessary position demand signals to the valve controller 26.

An operator interface is provided. The mechanism described uses the HHT 66 or the supervisory computer 58, but if desired the HHT 66 can be dispensed with and the necessary individual factors provided from the computer 58.

The computer 58 comprises display means which can display motion profile and force limit data. By use of the HHT 66 the motion profile and force limit data can be modified.

It will be understood that the valve controller 26 and the valve 22 form a servo system, the controller receiving a feed back signal indicating the actual spool position of the valve 22 from a sensor 64 and developing the actual valve control signals from the valve spool demand signals supplied by the micro controller 48 and the feed back signals from the sensor 64.

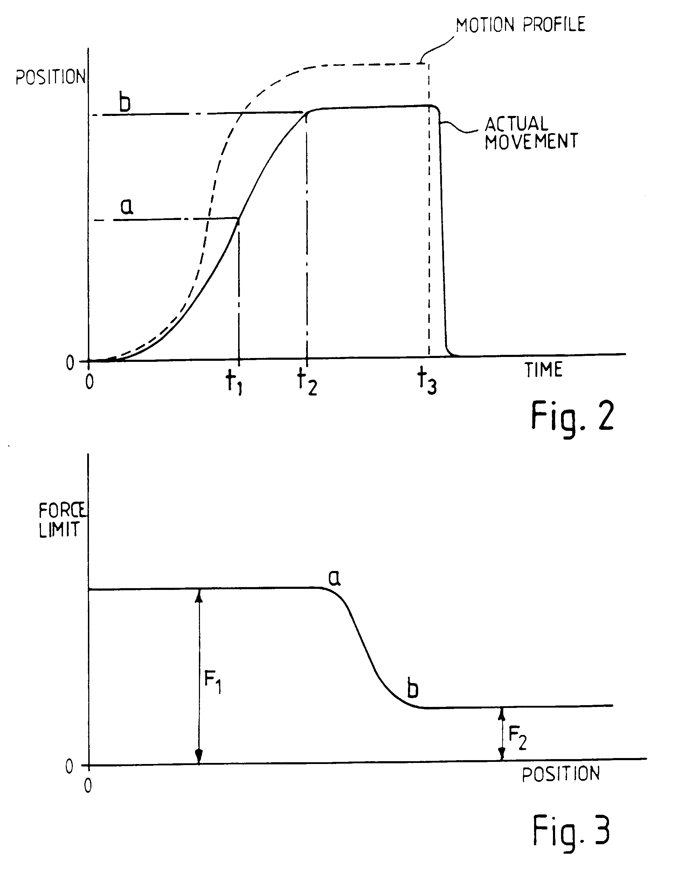

An algorithm which may conveniently be used to cause the plunger mechanism to operate as desired will be described later. The manner in which movement of the plunger 12 is controlled will be understood better from a consideration of Figures 2 and 3.

In Figure 2 a graph is shown which sets out the motion profile stored in the control system (in dotted lines). The actual movement of the plunger 12 is set out in full line. From the first position of the plunger (O in Figure 2), the plunger is moved upwards for a first period of time tl, and is attempting to follow the motion profile but,a first force limit F1 (see Figure 3-) is applied the movement which has the result that it lags behind the profile. The extent of this lag is somewhat exaggerated in Figure 2 for clarity.

At tl, the first force limit F1 is reduced, over a second period of time t2 to a lower force limited F2, and the plunger 12 is constrained in its movement by the force limit reduction over this period. For the period of time t2 - t3, movement of the plunger is solely constrained by the second force limit F2. At time +3 the motion profile will operate to obtain a rapid downward movement of the plunger.

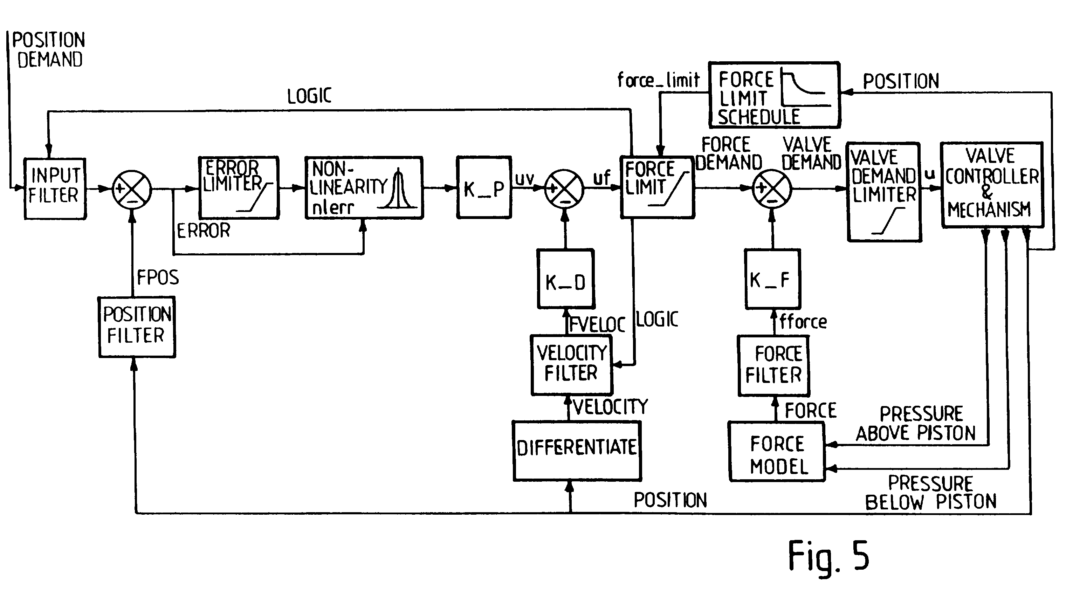

The algorithm which is used in the plunger mechanism is now explained with reference to the functional block diagram of figure 5.

The various parts and functions of the controller are described below.

Force Velocity, Position and Input Filters

In all cases a simple low pass filter is used to reduce high frequency signal noise. One example is given below, which is the low pass filter for the force signal. The filtered force, fforce, is given by

$$fforce = af*fz\text{-}1 + bf*FORCE \qquad\qquad \text{-(1)}$$

where

| | |
|---|---|
| af & bf | are constants in the force filter |
| fz1-1 | is the calculated filtered force from the previous algorithm iteration. |
| FORCE | is force value calculated during the present iteration of the algorithm. |
| af = | iter * T_F/(1.0 + iter*T_F) |
| bf = | 1.0/(1.0 + iter*T_F) |
| iter | is the iteration rate of the controller (Hz) |
| T_F | is the filter constant which is tuned to give an acceptable level of valve noise. |

The filters are all of the same form. The equations for the force filter are shown above. The corresponding variables used in the other filters are listed in the table below: The filtered variable being calculated by an equation (1).

The input, force position and velocity signals are filtered in a similar manner, and can be conditioned when a discontinuity is encountered. This can be done to achieve smooth continuous motion. The values of the filter constants for the input, force, velocity and position are tuned upwards from a very low value until an acceptable level of noise is achieved on each signal whilst still achieving the required performance. The penalty for increasing the value too high is loss of performance due to the increased time delay which accompanies the increased smoothing effect of the filter.

The input filter prevents noise from being transmitted through the system, and allows the demand to be conditioned when a discontinuity (e.g. the force limit) is encountered. The lines labelled "LOGIC" in the diagram indicate the conditioning. The filter helps to prevent high frequency resonances within the controlled system from being excited.

The corresponding variables for the four filters are listed below :

| Force | Velocity | Input | Position | |
|---|---|---|---|---|
| fforce | FVELOC | infil | FPOS | [filtered values] |
| T_F | T_V | T_I | T_P | [tuned filter constants] |
| af | av | ai | ap | )calculated filter |
| bf | bv | bi | bp | )constants |
| FORCE | veloc | demand | POSIT | Values during present iteration |
| fz-1 | fvz-1 | infil-1 | fpz-1 | Filtered values from previous iteration |

veloc     is the calculated mechanism velocity.

demand   is obtained from the demand profile. A value from this profile is used by the algorithm at each iteration.

POSIT    is the position of the mechanism. A new value for POSIT is obtained from the position sensor at each iteration of the new algorithm.

Error Limiter

This is used to clip the value of the error so that it remains within pre-chosen limits. This is useful, for example, to prevent overshoot of the mechanism in cases where the mechanism has been prevented from following the profile because it becomes jammed with another mechanism and is then suddenly released.

$$error = infil - FPOS$$

The error is clipped to be within the range +/- ERRLIM

Non-Linearity and K P.

End point stiffness is improved by multiplying the forward gain factor K-P by a further factor "nlerr". When the error becomes zero the function "nlerr" rises to its maximum value. The rate at which "nlerr" rises, and the range over which it rises can be altered by tuning the parameter "SHARPN" in the equation shown below. The value of "NL_OFF" is tuned to give a suitable value to the peak of "nlerr".

$$nlerr = 1.0 + NL\_OFF/(1.0 + SHARPN*error*error)$$

The error is then multiplied by the forward gain. The variable uv is defined by the equation

$$uv = K\_P*nlerr*error$$

or may be described as the active error reducing component of the algorithm.

Differentiation

The position value is used to calculate the velocity as follows:

$$veloc = w2*(POSIT - p2-1)*iter + 2.0*zx*vz-1-x2*vz-2$$

$$w2 = vfilt*vfilt$$

$$zx = 1.0 - VFILT$$

x2 zx*zx
vz-1 is the value of the velocity from the last iteration
vz-2 is the value of the velocity from the last but one iteration
p2-1 is the value of the position from the last iteration (unfiltered)

The equation for evaluating veloc is a digital filter, which provides an estimate of velocity based on the position measurement at discrete times. VFILT is the tuned filter constant. It is used to obtain an acceptable compromise between noise and time delay. With VFILT, time delay is reducing, though noise in the velocity estimate due to noise on the position signal is increasing. As VFILT is reduced, noise is reduced at the expense of increased time delay, which may introduce oscillation into the mechanism movement. A compromise has to be made.

$$\text{uf is defined by:} \qquad uf = uv - [FVELOC + K\_D]$$

where K_D is the velocity gain and uf is the input to a force control loop.

If the mechanism is in the correct demand position and the velocity is zero, the force required to move the mechanism to the corrrect position is zero and the value of uf is also zero.

Force Limiter

"uf" is effectively the demand input for a force loop controller, and this force demand is compared with the force limit. If it exceeds the limit it is clipped back to the limit. When this happens it is necessary to condition some of the earlier low pass filters in order to achieve smooth motion at this discontinuity:

infil is reset to #infil-1
FVELOC is reset to $\sim (1.0/K\_D)*(uv-uf)$

When the value of "uf" drops below the limit, the plunger continues upwards once more until it presses with the desired limiting force.

Force Model

Gravity exerts force on the moving parts of the mechanism. In the plunger this force is constant. and is equal to the weight of the piston. rod and plunger assembly. The force exerted by the pressures above and below the piston is calculated. The effective force available to move the mechanism is "FORCE":

$$gravity = G1*9.81$$

$$FORCE = (PRESS\_B*A\_below-(PRESS\_A*A\_above)-gravity$$

gravity    this is the gravity term. In the plunger mechanism this is simply the weight of the piston, rod and plunger assembly,

G1         mass of piston, piston rod and plunger assembly
PRESS_A pressure above piston
PRESS_B pressure below piston
A_above   effective area of top of piston
A_below   effective area below piston

The values "PRESS"_A" and "PRESS"_B" come from the pressure transducers. Values are read at each algorithm iteration.

Calculation of valve demand output

The valve demand u is calculated from

EP 0 691 940 B1

$$u = uf - (fforce*K\_F)$$

where K_F is the force gain.

The valve demand "u" is clipped to the physical limits of the system.

Force Limit Schedule

In the movement of the piston in a pressing stroke, at the start of the stroke for a first period of time, high value, limit is applied to the pressing stroke, a smoothy reduction from the first force limit to a second force limit is achieved using a trigometric function, and towards the finish of the stroke the second force limit is applied for a third period of time.

Up to the point "CHNGSTRT" the high limit "HILIM" is used. A smooth transition to a lower limit "LOLIM" occurs over a range "DELTA". After this "LOLIM" is used as the limit. Suitable values for these parameters are found by experience and experimentation. Over the transition range ("DELTA") the intermediate values for the limit are given by:

$$angle = (3.14/DELTA*(FPOS-CHNGSTRT))$$

$$force\_limit = (cos(angle)+1)*0.5*(HILIM-LOLIM)+LOLIM$$

Parameters to be tuned by the operator to achieve the desired results from the force limiter are

CHNGSTRT
HILIM
LOLIM
DELTA

The important things to be achieved when tuning the parameters are :

Final pressing force must be high enough to press glass into finish, but not so high as to force molds open (seams). Force earlier in stroke must be sufficiently high so as to press glass quickly. Transition range and the position for the start of the transition must be chosen so as to achieve a smooth and continuous plunger action.

Update History

After the valve actuation signal is sent, the variables used within the filters and the differentiator are updated e.g:

$$fz-1 = fforce$$

$$vz2 = vz1$$

$$vz1 = veloc$$

The algorithm then repeats.

**Claims**

1. A control system for controlling the movement of a plunger (12) for use in forming parisons in a glassware manufacturing machine which plunger is driven between first and second positions by a pneumatic piston and cylinder device (14,16) comprising:

   a solenoid driven proportional pneumatic valve (22) adapted to control the supply of air under pressure to the piston and cylinder device (14,16),
   a transducer (36) which senses the position of the plunger (12),

7

pressure sensors (32,34) which sense the pressure on opposite sides of the piston of the piston and cylinder device (14,16),

an electronic signal processing system (48) incorporating a memory (54,56) in which a motion profile and force limits are stored, which processing system through each cycle receives as a feedback from the transducer (36) the position of the plunger (12) and from the pressure sensors (32,34) the pressure on opposite sides of the piston (14) and which produces control signals for the valve (22) in accordance with a repetive algorithm which takes account of

(a) the displacment of the plunger (12) from the motion profile,
(b) the velocity of the plunger (12) as derived from the rate of change of its position, and;
(c) the force exerted on the plunger (12) as derived from the pressure difference across the piston (14),

so that the valve (22) supplies air to the piston and cylinder device (14,16) to cause the plunger (12) to move from rest at the first position for a first period of time in a manner limited by the motion profile and a first force limit applied to the plunger, for a second period of time in a manner limited by the reduction from the first force limit to a second force limit and for a third period of time limited by the second force limit.

2. A system according to claim 1, wherein operation of the pneumatic valve (22) is controlled by a valve controller (26) connected to the valve (22) by two lines (28,30) one of which supplies a drive signal to the valve (22) to drive the valve spool and the other of which returns a spool-position indication signal.

3. A system according to claim 1 or claim 2, wherein the pressure sensors (32,34) sense the pressures in the cylinder (16) above and below the piston (14) and the position-sensing transducer (36) ceases movement of the piston (14).

4. A system according to claim 3, wherein the three transducers (32,34,36) supply signals through analogue/digital converters (52) to a servo central card incorporating a microcontroller which instructs the valve controller (26) through a digital/analogue converter (50).

5. A system according to claim 4, wherein the microcontroller (48) is connected to a memory (54,56) which stores a profile program for the movement of the plunger (12) and force limits for the plunger (12).

6. A system according to claim 5, wherein a supervisory computer (58) for the machine is connected through an interface to the servo central card to pass algorithm information to the memory (54,56) which information is accessed by the valve controller (26) under the control of a synchronisation signal.

7. A system according to claim 6, wherein means (66) are provided to enable the constant factors of the alogrithm information to be adjusted and adjustments stored in the memory (54,56).

8. A system according to claim 7, wherein the microcontroller (48) repetitively accesses the memory (54,56) for the profile program, force limits, algorithm program and any factor adjustments and combines the accessed information to generate position demand signals fed to the valve controller (26).

9. A system according to any of the claims 1 to 8, wherein the algorithm operates repetitively to generate the position signal signals subject to a valve demand limit, on the basis of a filtered force value subject to an error limit.

**Patentansprüche**

1. Ein Steuersystem zum Steuern der Bewegung eines Plungers (12) zur Verwendung beim Formen von Külbeln in einer Maschine zum Herstellen von Glaswaren, wobei der Plunger durch eine pneumatische Kolben- und Zylindervorrichtung (14, 16) zwischen einer ersten und einer zweiten Stellung bewegt wird, bestehend aus:

einem von einer Magnetspule angetriebenen pneumatischen Proportionalventil (22) zum Steuern der Zufuhr von Druckluft zu der Kolben- und Zylindervorrichtung (14, 16),
einem Meßwertwandler (36), der die Stellung des Plungers (12) ermittelt,
Drucksensoren (32, 34), die den Druck auf beiden Seiten des Kolbens der Kolben- und Zylindervorrichtung (14, 16) ermitteln,
einem elektronischen Signalverarbeitungssystem (48), einschließlich eines Speichers (54, 56), in dem ein Bewegungsprofil und Kraftbegrenzungen gespeichert werden und das während jedes Zyklus als eine Rückkopplung vom Meßwertwandler (36) die Stellung des Plungers (12) und von den Drucksensoren (32, 34) den auf beiden Seiten des Kolbens (14) herrschenden Druck empfängt und das nach Maßgabe eines sich wiederholenden Algorithmus, der

(a) die Versetzung des Plungers (12) gegenüber dem Bewegungsprofil,
(b) die Geschwindigkeit des Plungers (12) als Ableitung vom Grad seiner Stellungsänderung und
(c) die auf den Plunger (12) ausgeübte Kraft als Ableitung des über dem Kolben (14) herrschenden Druckunterschiedes

berücksichtigt, Steuersignale für das Ventil (22) erzeugt,

so daß das Ventil (22) der Kolben- und Zylindervorrichtung (14, 16) Luft zuführt zum Bewirken einer Bewegung des Plungers (12) aus der Ruhelage an der ersten Stellung während eines ersten Zeitabschnittes in einer vom Bewegungsprofil begrenzten Weise und einer an den Plunger angelegten ersten Kraftbegrenzung während eines zweiten Zeitabschnittes in einer durch die Herabsetzung von der ersten auf eine zweite Kraftbegrenzung begrenzten Weise und während eines durch die zweite Kraftbegrenzung begrenzten dritten Zeitabschnittes.

2. Ein System nach Anspruch 1, wobei der Betrieb des pneumatischen Ventils (22) durch einen über zwei Leitungen (28, 30), von denen eine ihm zum Antreiben des Ventilschiebers ein Antriebssignal zuführt und die andere ein die Schieberstellung anzeigendes Signal zurückführt, an es angeschlossenen Ventilregler (26) gesteuert wird.

3. Ein System nach Anspruch 1 oder Anspruch 2, wobei die Drucksensoren (32, 34) die Drücke im Zylinder (16) über und unter dem Kolben (14) messen und der die Stellung feststellende Meßwertwandler (36) die Bewegung des Kolbens (14) beendet.

4. Ein System nach Anspruch 3, wobei die drei Meßwertwandler (32, 34, 36) über Analog/Digitalwandler (52) Signale einer einen Mikrokontroller enthaltenden zentralen Servokarte zuführen, wobei der Mikrokontroller den Ventilregler (26) über einen Digital/Analogwandler (50) steuert.

5. Ein System nach Anspruch 4, wobei der Mikrokontroller (48) an einen Speicher (54, 56) angeschlossen ist, der ein Profilprogramm für die Bewegung des Plungers (12) und die Kraftbegrenzungen für den Plunger (12) speichert.

6. Ein System nach Anspruch 5, wobei ein Überwachungscomputer (58) für die Maschine über eine Schnittstelle an die zentrale Servokarte angeschlossen ist zum Weiterleiten der Algorithmusinformation zum Speicher (54, 56), wobei der Zugang zu dieser Information unter der Steuerung durch ein Synchronisationssignal über den Ventilregler (26) erfolgt.

7. Ein System nach Anspruch 6, wobei Mittel (66) vorgesehen sind, die eine Einstellung der konstanten Faktoren der Algorithmusinformation und eine Speicherung der Einstellungen im Speicher (54, 56) zulassen.

8. Ein System nach Anspruch 7, wobei der Mikrokontroller (48) wiederholt auf den Speicher (54, 56) wegen des Profilprogramms, der Kraftbegrenzungen, des Algorithmusprogramms und jeglicher Faktoreinstellungen zugreift und die abgegriffene Information zum Generieren von dem Ventilregler (26) zugeführten Stellungsanforderungssignalen kombiniert.

9. Ein System nach irgendeinem der Ansprüche 1 bis 8, wobei der Algorithmus wiederholt zum Generieren der Positionssignalsignale in Tätigkeit tritt nach Maßgabe einer Ventilanforderungsbegrenzung auf der Grundlage eines gefilterten Kraftwertes nach Maßgabe einer Fehlerbegrenzung.

## Revendications

1. Système de commande destiné à commander le mouvement d'un plongeur (12) servant à mouler des ébauches dans une machine à mouler les objets de verrre, lequel plongeur est entraîné entre des première et deuxième positions par un dispositif pneumatique à piston et cylindre (14, 16), comprenant :

une distributeur pneumatique proportionnel (22) entraîné par électro-aimant, adapté pour commander l'envoi de l'air sous pression au dispositif à piston et cylindre (14, 16),
un transducteur (36) qui capte la position du plongeur (12)
des capteurs de pression (32, 34) qui captent les pressions sur des faces opposées du dispositif à piston et cylindre (14, 16),
un système électronique (48) de traitement des signaux comprenant une mémoire (54, 56) dans laquelle un profil de mouvement et des limites de force sont stockés, lequel système de traitement reçoit, dans chaque cycle, en tant que réaction en provenance du transducteur (36), la position du plongeur (12) et, en provenance des capteurs de pression (32, 34), la pression régnant sur des faces opposées du piston (14), et qui produit des signaux de commande pour le distributeur (22) en accord avec un algorithme répétitif qui tient compte des paramètres suivants :

(a) l'écart du plongeur (12) par rapport au profil de mouvement ;
(b) la vitesse du plongeur (12), dérivée du degré de variation de sa position, et
(c) la force exercée sur le plongeur (12), dérivée de la différence de pression de part et d'autre du piston (14), de sorte que le distributeur (22) envoie de l'air au dispositif à piston et cylindre (14, 16) pour amener le plongeur (12) à se déplacer à partir de l'arrêt à sa première position, pendant une première période de temps, d'une façon limitée par le profil de mouvement et par une première limite de force appliquée au plongeur et, pendant une deuxième période de temps d'une façon limitée par la réduction menant de la première limite de force à une deuxième limite de force et, pendant une troisième période de temps, limitée par la deuxième limite de force.

2. Système selon la revendication 1 ou la revendication 2, dans lequel la manoeuvre du distributeur pneumatique (22) est commandée par un moyen de commande (26) de distributeur connecté au distributeur (22) par deux lignes (28, 30), dont l'une transmet un signal d'entraînement au distributeur (22) pour entraîner le tiroir de distributeur et dont l'autre renvoie un signal d'indication de la position du tiroir.

3. Système selon la revendication 1 ou la revendication 2, dans lequel les capteurs de pression (32, 34) captent les pressions régnant dans le cylindre (16) au-dessus et au-dessous du piston (14) et le transducteur capteur de position (36) provoque le déplacement du piston (14).

4. Système selon la revendication 3, dans lequel les trois transducteurs (32, 34, 36) transmettent des signaux à travers des convertisseurs analogiques/numériques (52) à une carte de servocommande comprenant un micro-calculateur qui fournit des instructions au moyen de commande (26) du distributeur à travers un convertisseur numérique/analogique (50).

5. Système selon la revendication 4, dans lequel le micro-calculateur (48) est connecté à une mémoire (54, 56) qui stocke un programme de profil pour le mouvement du plongeur (12).

6. Système selon la revendication 5, dans lequel un ordinateur superviseur (58) prévu pour la machine est connecté à travers une interface à la carte de servocommande pour transmettre l'information de l'algorithme à la mémoire (54, 56), le moyen de commande (26) du distributeur ayant accès à cette information sous la commande d'un signal de synchronisation.

7. Système selon la revendication 6, dans lequel des moyens (66) sont prévus pour permettre aux facteurs constants de l'information de l'algorithme d'être ajustés et pour permettre aux ajustements d'être stockés dans la mémoire (54, 56).

8. Système selon la revendication 7, dans lequel le micro-calculateur (48) a répétitivement accès à la mémoire (54, 56) pour lire le programme de profil, les limites de force, le programme d'algorithme et les éventuels ajustements de facteurs, et combine l'information à laquelle il a accédé pour engendrer des signaux de demande de position transmis au moyen de commande (26) du distributeur.

9. Système selon une quelconque des revendications 1 à 8, dans lequel l'algorithme opère répétitivement pour engendrer des signaux de position soumis à une limite de demande de distributeur, sur la base d'une valeur de force filtrée, soumise à une limite d'erreur.

Fig. 1

EP 0 691 940 B1

Fig. 2

Fig. 3

Fig. 4

SYNCHRONISATION
SIGNAL

Fig. 5